# EUROPEAN PATENT APPLICATION

(11) **EP 0 884 100 A1**
(43) Date of publication of application: **16.12.1998**
(21) Application number: 97905410.3
(22) Date of filing: 26.02.1997
(51) Int. Cl.: B01J 13/00

(54) **PROCESSES FOR PRODUCING EMULSIFIED FAT COMPOSITION**

(30) Priority: 29.02.1996 JP 42512/96
(71) Applicant: KANEKA CORPORATION, Osaka-shi, Osaka 530 (JP)
(72) Inventor: SUZUKI, Kanichi 182-68, Yoshiyuki, Hiroshima 724 (JP)
(74) Representative: VOSSIUS & PARTNER
(86) International application number: JP9700574
(87) International publication number: WO9731708

(57) **Abstract**

A method of preparing an emulsified composition having a disperse phase in a high compounding proportion, such as an emulsified fat and oil composition (e.g., a high oil content oil-in-water type emulsion or a high water content water-in-oil type emulsion), which was impossible to prepare by the conventional method, with ease and good efficiency in a stable manner. This method comprises passing a previously prepared high oil content water-in-oil type emulsion through a porous structure such as a hydrophilic porous membrane, thereby causing phase inversion between an aqueous phase and an oil phase to form a high oil content oil-in-water type emulsion, or passing a previously prepared high water content oil-in-water type emulsion through a hydrophobic porous structure, thereby causing phase inversion between an oil phase and an aqueous phase to form a high water content water-in-oil type emulsion. This method is expected for novel applications in various fields including the field of food, such as margarine, whipped cream, and the like.

## Description

### FIELD OF THE INVENTION

The present invention relates to a method of preparing an emulsified fat and oil composition. More particularly, the present invention relates to a method of preparing an emulsified composition having a disperse phase in a high compounding proportion which is impossible or is extremely difficult to produce by the conventional emulsification method, such as an emulsified fat and oil composition (e.g., a high oil content oil-in-water type emulsion or a high water content water-in-oil type emulsion), with ease and good efficiency in a stable manner.

### BACKGROUND OF THE INVENTION

Mixing a material which is difficult to dissolve in water with water, or emulsification technique is investigated as an important subject in various fields. For example, in the field of foods, this emulsification technique is one of the most important subjects for the production of margarine, whipped cream, and the like, and various investigations have been made on selection of an emulsifier to be used, compounding manner, emulsification method and the like in order to obtain goods having a stable emulsification form.

Regarding the emulsification technique, an emulsification method using a shear force by a stirring device, a homogenizer, or the like has conventionally been used mainly. However, an emulsification technique of passing through a porous membrane having micropores has recently been developed, thereby making it possible to develop goods having remarkable characteristics (Japanese Unexamined Patent Application No. Hei. 2-95433). Very uniform products close to a so-called monodisperse emulsion can be obtained by using the emulsification method which utilizes such a porous membrane, and such products are far stable as compared with products obtained by the conventional methods. Further, this method does not require high pressure as required in a homogenizer, and can readily perform emulsification. Therefore, it can say that this method is an epoch-making emulsification method which has not conventionally been used. Furthermore, for example, a method of obtaining a water-in-oil type emulsion (hereinafter referred to as a "W/O type emulsion" for brevity) of low oil content which is low calorie is proposed as an application example using this membrane emulsification method (Japanese Unexamined Patent Application No. Hei. 4-210553). When this method is used, a W/O type emulsion having a high water content to a certain extent can be obtained. However, when this method is put into an actual industrial production, an emulsification rate cannot be increased due to a problem of wettability between the membrane and the disperse phase, and it cannot always say that this method is an efficient method. On the other hand, a method is proposed wherein emulsification is previously conducted by a mechanical stirring or the like prior to passing through the membrane, that is, a preliminary emulsification is conducted, thereby various problems involved in the membrane emulsification method can be overcome (Japanese Patent Application No. Hei. 6-39259). A technique wherein a stable emulsion which has not conventionally been obtained can readily be obtained by this method, and it is expected to apply this method to various fields.

However, recently, a calorie control further becomes a matter of concern for the food industry, and a demand for further low calorie margarine is inexhaustible, so that a demand for a W/O type emulsion having further increased water content in the disperse phase is increased. Further, even in an oil-in-water type emulsion (hereinafter referred to as an "O/W type emulsion" for brevity), a demand for increasing an oil content in the disperse phase is increased in order to impart various functions to the emulsion.

In order to satisfy those demands, it is necessary to greatly increase the compounding proportion of the disperse phase (internal phase) in the emulsion. However, in order to increase the compounding proportion of the disperse phase to a certain high extent in the conventional emulsification method, it can be achieved only when a large amount of the emulsifier is used or the emulsification method is performed under very limited, very narrow conditions, or it has been impossible to achieve such. Even if it is achieved, the stability of the emulsion obtained is very poor in many cases, and it is generally necessary to add a large amount of additives such as a thickener to an aqueous phase portion. For example, when obtaining a W/O type emulsion, the water content in the disperse phase is at most about 70% by weight as the upper limit even in the membrane emulsification method. If the water content exceeds the limit, it is impossible to obtain an emulsion even if the amount of the emulsifier added is increased or a large amount of additives is added, or the stability of the emulsion obtained is markedly decreased.

Thus, it is the actual circumstances that even the membrane emulsification method is not an emulsification method that can satisfy with all the requirements, and the conventional emulsification methods could not produce an emulsion having a disperse phase in a high compounding proportion with ease and good efficiency in a stable manner.

### SUMMARY OF THE INVENTION

In view of the above circumstances, as a result of extensive study to establish a technique of greatly increasing a compounding proportion of a disperse phase in an emulsion, it has been found that if an emulsifying oil and fat composition is passed through a structure having many uniform pores (porous structure), emulsification form of an emulsified product obtained is determined by properties of the porous structure, irrespective of the emulsification form prior to passing through the porous structure.

In more detail, even if it is a W/O type emulsion or it is an O/W type emulsion, when the emulsion is passed through a hydrophobic porous structure, a W/O type emulsion is obtained. Further, even if it is an O/W type emulsion or it is a W/O type emulsion, when the emulsion is passed through a hydrophilic porous structure, an O/W type emulsion is obtained. In other words, it has been found that if the O/W type emulsion is passed through the hydrophobic porous structure, phase inversion occurs in passing through the porous structure, thereby obtaining a W/O type emulsion, and if the W/O type emulsion is passed through the hydrophilic porous structure, phase inversion occurs in passing through the porous structure, thereby obtaining an O/W type emulsion. Thus, by considering properties of the structure having micropores, phase inversion of disperse phase (internal phase) and continuous phase (external phase) occurs, so that a stable emulsified product is obtained even if a compounding proportion of the disperse phase is considerably high.

Further, an emulsion having a continuous phase in a high compounding proportion is relatively easily available. Therefore, it is thought that if the emulsion having the continuous phase in a high compounding proportion is passed through a porous structure, phase inversion occurs to reverse the emulsification form, so that an emulsion having a disperse phase in a high compounding proportion can be produced with ease and good efficiency in a stable manner. The present invention has been completed based on this finding.

Accordingly, an object of the present invention is to provide a method of preparing an emulsified fat and oil composition, which comprises passing an emulsified fat and oil composition through a porous structure, thereby causing phase inversion of an emulsification form between an internal phase and an external phase.

In order to achieve the above object of the present invention, the emulsified fat and oil composition to be passed through the porous structure is preferably an emulsified fat and oil composition which has previously be subjected to a pre-emulsification, but naturally existing emulsified fat and oil compositions can also be used in the present invention.

### DETAILED DESCRIPTION OF THE INVENTION

The details on the phase inversion mechanism between the internal phase and the external phase of an emulsion in passing it through the porous structure are not known at present, however by using the method of the present invention it is possible to obtain a very stable emulsion having a disperse phase in a high compounding proportion, which has not conventionally been obtained. For example, where it is desired to obtain an O/W type emulsion having a high oil content, a W/O type emulsion having a high oil content, which is easily obtained, is previously prepared, or the conventional W/O type emulsion having a high oil content is passed through a hydrophilic porous structure, whereby a stable O/W type emulsion having a high oil content can easily be obtained. Similarly, where it is desired to obtain a W/O type emulsion having a high water content, an O/W type emulsion having a high water content, which is easily obtained, is previously prepared, or the conventional O/W type emulsion having a high water content is passed through a hydrophobic porous structure, whereby a stable W/O type emulsion having a high water content can easily be obtained. Thus, the method according to the present invention makes it possible to easily obtain a stable emulsion having a disperse phase in a compounding proportion of about 70% or more, which has not conventionally been obtained. Furthermore, any problem does not occur even if production rate of emulsion is about 50 tons/hour per 1 m² of the area of a porous structure, and considering industrial productivity, this method is a very efficient method. It should be noted that the emulsification which is previously conducted in order to obtain an emulsified fat and oil composition for passing through a porous structure, i.e., a pre-emulsification method, is not particularly limited, and the conventional mechanical stirring can be used without any problem.

The porous structure which can be used in the present invention is not particularly limited so long as it is a porous membrane having a uniform pore size, or it is a structure having a number of micropores. Examples of the hydrophilic porous structure include porous glass membrane, hydrophilic polytetrafluoroethylene (hereinafter referred to as a "PTFE" for brevity) membrane, cellulose acetate membrane, nitrocellulose membrane, and metal porous structures which are rendered hydrophilic (such as KOASE MAZELAR, ramond supermixer, etc.). Examples of the hydrophobic porous structure include hydrophobic PTFE membrane, products obtained by, for example, surface treating the above-described various kinds of porous membranes or porous structures to render those hydrophobic, and hydrophobic membranes obtained by treatment of, for example, immersing membranes with oils and fats. Those porous structures can have various forms such as plate form, tubular form, etc., and the structure having any form can be used in the present invention without any problem.

After completion of the emulsification, the emulsifying oil and fat composition obtained by the method of the present invention can be processed to a final form of foods such as margarine, cream, etc., through ordinary cooling, stirring unit, and the like.

The types of the fats and oils which can be used in the present invention are not particularly limited, and animal and vegetable oils, animal and vegetable hardened oils, fractionated oils, interesterificated oils, and the like can appropriately be used. Further, hardened oils or fractionated oils of those fats and oils, and materials having compounded therewith various kinds of fats and oils can also be used. Where fat and oil which is solid at normal temperature, such as hardened oil, is used, the emulsification operation is conducted at a temperature at which its fat and oil is liquid (generally about 60°C), so that the desired emulsified fat and oil composition can be obtained. Where a W/O type emulsion is produced, the emulsion is passed through ordinary cooling and stirring units (votator, combinator, perfector, etc.) after emulsification, so that margarine is obtained. This enables the stability of emulsion to further increase as compared with the case of storing it in a liquid state.

The emulsifier to be added to an oil phase is not particularly be limited. Glycerin fatty acid esters, saccharose fatty acid esters, sorbitan fatty acid esters, propylene glycol fatty acid esters, polyglycerin fatty acid esters, polyglycerin condensed ricinoleic acid esters, lecithin, and the like which are generally used can be used alone or as mixtures of two or more thereof. The amount of the emulsifier to be added is not particularly limited. However, if the concentration of the emulsifier is too low similar to the general, separation of emulsion becomes fast, resulting in problem on stability.

Examples of the emulsifier to be added to an aqueous phase include saccharose fatty acid ester, sorbitan fatty acid ester, polyglycerin fatty acid, lecithin, and the like. Those having HLB (Hydrophilic Lipophilic Balance) of 8 or more, and preferably 10 or more, are used alone or as mixtures of two or more thereof. In this case, the amount of the emulsifier to be added is not particularly limited. However, if the concentration of the emulsifier is too low, separation of the emulsion becomes fast, resulting in problem of stability.

The compounding proportion of oil content and water content in the emulsion is not particularly be limited, but the method according to the present invention is particularly effective for the production of emulsion having a disperse phase in a high compounding proportion. Specifically, it is possible for the method of the present invention to produce an emulsion having a disperse phase in the compounding proportion of from more than 50% to about 85%. Actually, it is possible to obtain emulsified products by using the method of the present invention even if the compounding proportion of the disperse phase is about 90%. However, the form of emulsion in the disperse phase is far strained, partially causing double emulsification or poor phase inversion. Thus, the stability is not sufficient in this case. However, in the general case, it is sufficient if the compounding proportion of the disperse phase is 80% in order to increase the function from the standpoint of high disperse phase concentration. Even if the compounding proportion of the disperse phase is increased to 90%, particularly remarkable products are not obtained. Thus, it is not necessary to aimlessly increase the compounding proportion of the disperse phase. Therefore, the method of the present invention which can achieve about 50 to 80% of the compounding proportion of the disperse phase, which has been extremely difficult to prepare in the conventional method, is very effective. In addition, as described above, the method of the present invention makes it possible to obtain an emulsified product having the compounding proportion of disperse phase in the above-described range as a stable emulsion with very ease and good efficiency without particularly increasing the amount of emulsifier and also without requiring addition of various kinds of thickeners, and the like. As a matter of fact, even in the case that the compounding proportion of the disperse phase is low, the method of the present invention can effectively be applied thereto so long as a pre-emulsification is normally conducted.

The method of preparing the emulsified fat and oil composition according to the present invention is specifically described below.

Oil phase and aqueous phase, to which appropriate emulsifiers have been added, are placed in a vessel. A stirrer such as a homomixer is set in the vessel. While stirring, those are dissolved at a room temperature if a liquid fat and oil is used, or under heating at a temperature at which an oil and fat used becomes liquid if a solid fat and oil is contained, i.e., generally at a temperature of from room temperature to about 70°C, followed by mixing and emulsification. After completion of this pre-emulsification, aeration is conducted to remove air entrapped during stirring. The aeration can either be conducted by allowing to stand as it is, or in vacuum, and it is sufficient that the aeration time is generally within 10 minutes.

The emulsified product thus pre-emulsified and aerated is quantitatively sent to a porous structure by gas such as nitrogen gas, a pump, or the combination thereof. In the method of the present invention, the desired stable emulsion can be obtained in an amount such that an average permeation rate is 1 to 1,000 kg/min. per 1 m² of area of the porous structure.

A particle size of the emulsion obtained by passing through the porous structure has a relationship with a pore size of the porous structure used. In general, the particle size of the emulsion obtained is controlled to have an average particle size of about 1 to 5 times the pore size of the porous structure. Therefore, the particle size of the emulsion obtained can freely be controlled by changing a pore size of micropores of the porous structure to be used.

The present invention is described in more detail by referring to the following examples and comparative examples, but it should be understood that the invention is not construed as being limited thereto. Unless otherwise indicated, all parts and percents are by weight.

### (1) Preparation Example of O/W Type Emulsion (O/W = 6/4)

### Example 1

### (1-1) Preparation of oil phase

60 Parts of corn oil were heated to 60°C. While stirring the oil with a chemistirrer (B-100 Model, a product of Tokyo Rikakikai Co., Ltd.) at a rate of 620 rpm, 2.0% of polyglycerin condensed ricinoleic acid ester ("SY GLYSTAR, CR-500," a trade name, a product of Sakamoto Yakuhin Kogyo K.K.) was added thereto to dissolve therein. After completion of the dissolution, a temperature of the oil phase was adjusted to 20°C.

### (1-2) Preparation of aqueous phase

40 Parts of water were heated to 60°C. While stirring water with a chemistirrer at a rate of 620 rpm, 2.0% of polyglycerin fatty acid ester having HLB of 15 ("SY GLYSTAR, ML-750," a trade name, a product of Sakamoto Yakuhin Kogyo K.K.) was added thereto to dissolve therein. After completion of the dissolution, a temperature of the aqueous phase was adjusted to 20°C.

### (1-3) Preparation of preliminarily emulsified W/O type emulsion

The aqueous phase portion prepared above was gradually added to the oil phase portion prepared above, followed by stirring with a chemistirrer at a rate of 620 rpm for 20 minutes. After completion of the stirring, the resulting mixture was allowed to stand for 10 minutes to conduct aeration, thereby obtaining a W/O type emulsion.

### (1-4) Preparation of O/W type emulsion

The preliminarily emulsified W/O type emulsion was passed through a porous glass membrane having an inner diameter of 9.0 mm, an outer diameter of 10.0 mm, a length of 100.0 mm and an average pore size (dp) of 2.70 µm ("MPG," a trade name, a product of Ise Kagaku K.K.) at an average permeation rate of 1 kg/min to perform phase inversion, thereby obtaining an O/W type emulsion. The emulsion obtained did not show phase inversion and separation even after 24 hours, and thus was sufficiently stable.

### Comparative Example 1a (Conventional membrane emulsification method)

The oil phase portion prepared in the same manner as in Example 1 (1-1) was introduced under pressure into the aqueous phase portion prepared in the same manner as in Example 1 (1-2) through a porous module having mounted therein a porous glass membrane having an inner diameter of 9.0 mm, an outer diameter of 10.0 mm, a length of 100.0 mm and an average pore size (dp) of 2.70 µm ("MPG," a trade name, a product of Ise Kagaku K.K.) to obtain an O/W type emulsion. However, the production rate of the emulsion could only be increased up to 0.02 kg/min. on the average. Further, the emulsion obtained showed slight separation between the oil phase and the aqueous phase.

### Comparative Example 1b (Mechanical stirring method)

The oil phase portion prepared in the same manner as in Example 1 (1-1) was gradually added to the aqueous phase portion prepared in the same manner as in Example 1 (1-2) while stirring with a chemistirrer at a rate of 620 rpm. Immediately after completion of the addition of the oil phase, phase inversion occurred, and as a result, an O/W type emulsion could not be obtained.

### (2) Preparation Example of O/W Type Emulsion (O/W = 7/3)

### EXAMPLE 2

### (2-1) Preparation of oil phase

70 Parts of corn oil were heated to 60°C. While stirring the oil with a chemistirrer (B-100 Model, a product of Tokyo Rikakikai Co., Ltd.) at a rate of 620 rpm, 2.0% of polyglycerin condensed ricinoleic acid ester ("SY GLYSTAR, CR-500," a trade name, a product of Sakamoto Yakuhin Kogyo K.K.) was added thereto to dissolve therein. After completion of the dissolution, a temperature of the oil phase was adjusted to 20°C.

### (2-2) Preparation of aqueous phase

30 Parts of water were heated to 60°C. While stirring water with a chemistirrer at a rate of 620 rpm, 2.0% of polyglycerin fatty acid ester having HLB of 15 ("SY GLYSTAR, ML-750," a trade name, a product of Sakamoto Yakuhin Kogyo K.K.) was added thereto to dissolve therein. After completion of the dissolution, a temperature of the aqueous phase was adjusted to 20°C.

### (2-3) Preparation of preliminarily emulsified W/O type emulsion

The aqueous phase portion prepared above was gradually added to the oil phase portion prepared above, followed by stirring with a chemistirrer at a rate of 620 rpm for 20 minutes. After completion of the stirring, the resulting mixture was allowed to stand for 10 minutes to conduct aeration, thereby obtaining a W/O type emulsion.

### (2-4) Preparation of O/W type emulsion

The preliminarily emulsified W/O type emulsion was passed through a porous glass membrane having an inner diameter of 9.0 mm, an outer diameter of 10.0 mm, a length of 100.0 mm and an average pore size (dp) of 2.70 µm ("MPG", a trade name, a product of Ise Kagaku K.K.) at an average permeation rate of 1 kg/min. to perform phase inversion, thereby obtaining an O/W type emulsion. The emulsion obtained was sufficiently stable as the same as in Example 1.

### Comparative Example 2a (Conventional membrane emulsification method)

The oil phase portion prepared in the same manner as in Example 2 (2-1) was introduced under pressure into the aqueous phase portion prepared in the same manner as in Example 2 (2-2) through a porous module having mounted therein a porous glass membrane having an inner diameter of 9.0 mm, an outer diameter of 10.0 mm, a length of 100.0 mm and an average pore size (dp) of 2.70 µm ("MPG," a trade name, a product of Ise Kagaku K.K.). However, part of the oil phase and the aqueous phase showed separation, and a stable O/W type emulsion could not be obtained.

### Comparative Example 2b (Mechanical stirring method)

The oil phase portion prepared in the same manner as in Example 2 (2-1) was gradually added to the aqueous phase portion prepared in the same manner as in Example 2 (2-2) while stirring with a chemistirrer at a rate of 620 rpm. However, prior to completion of the addition of the oil phase, phase inversion occurred, and as a result, an O/W type emulsion could not be obtained.

### (3) Preparation Example of O/W Type Emulsion (O/W = 8/2)

### Example 3

### (3-1) Preparation of oil phase

80 Parts of corn oil were heated to 60°C. While stirring the oil with a chemistirrer (B-100 Model, a product of Tokyo Rikakikai Co., Ltd.) at a rate of 620 rpm, 2.0% of polyglycerin condensed ricinoleic acid ester ("SY GLYSTAR, CR-500," a trade name, a product of Sakamoto Yakuhin Kogyo K.K.) was added thereto to dissolve therein. After completion of the dissolution, a temperature of the oil phase was adjusted to 20°C.

### (3-2) Preparation of aqueous phase

20 Parts of water were heated to 60°C. While stirring water with a chemistirrer at a rate of 620 rpm, 2.0% of polyglycerin fatty acid ester having HLB of 15 ("SY GLYSTAR, ML-750," a trade name, a product of Sakamoto Yakuhin Kogyo K.K.) was added thereto to dissolve therein. After completion of the dissolution, a temperature of the aqueous phase was adjusted to 20°C.

### (3-3) Preparation of preliminarily emulsified W/O type emulsion

The aqueous phase portion prepared above was gradually added to the oil phase portion prepared above, followed by stirring with a chemistirrer at a rate of 620 rpm for 20 minutes. After completion of the stirring, the resulting mixture was allowed to stand for 10 minutes to conduct aeration, thereby obtaining a W/O type emulsion.

### (3-4) Preparation of O/W type emulsion

The preliminarily emulsified W/O type emulsion was passed through a porous glass membrane having an inner diameter of 9.0 mm, an outer diameter of 10.0 mm, a length of 100.0 mm and an average pore size (dp) of 2.70 µm ("MPG," a trade name, a product of Ise Kagaku K.K.) at an average permeation rate of 1 kg/min. to perform phase inversion, thereby obtaining an O/W type emulsion. The emulsion obtained was considerably highly viscous, but was stable as in Example 1.

### Comparative Example 3a (Conventional membrane emulsification method)

The oil phase portion prepared in the same manner as in Example 3 (3-1) was introduced under pressure into the aqueous phase portion prepared in the same manner as in Example 3 (3-2) through a porous module having mounted therein a porous glass membrane having an inner diameter of 9.0 mm, an outer diameter of 10.0 mm, a length of 100.0 mm and an average pore size dp of 2.70 pm ("MPG," a trade name, a product of Ise Kagaku K.K.). However, substantially all of the oil phase and the aqueous phase showed separation, and a stable O/W type emulsion could not be obtained.

### Comparative Example 3b (Mechanical stirring method)

The oil phase portion prepared in the same manner as in Example 3 (3-1) was gradually added to the aqueous phase portion prepared in the same manner as in Example 3 (3-2) while stirring with a chemistirrer at a rate of 620 rpm. However, prior to completion of the addition of the oil phase, phase inversion occurred, and as a result, an O/W type emulsion could not be obtained.

### (4) Preparation Example of W/O Type Emulsion (W/O = 6/4)

### Example 4

### (4-1) Preparation of oil phase

40 Parts of corn oil were heated to 60°C. While stirring the oil with a chemistirrer (B-100 Model, a product of Tokyo Rikakikai Co., Ltd.) at a rate of 620 rpm, 2.0% of polyglycerin condensed ricinoleic acid ester ("SY GLYSTAR, CR-500," a trade name, a product of Sakamoto Yakuhin Kogyo K.K.) was added thereto to dissolve therein. After completion of the dissolution, a temperature of the oil phase was adjusted to 20°C.

### (4-2) Preparation of aqueous phase

60 Parts of water were heated to 60°C. While stirring water with a chemistirrer at a rate of 620 rpm, 2.0% of polyglycerin fatty acid ester having HLB of 11 ("SY GLYSTAR, MO-500," a trade name, a product of Sakamoto Yakuhin Kogyo K.K.) was added thereto to dissolve therein. After completion of the dissolution, a temperature of the aqueous phase was adjusted to 20°C.

### (4-3) Preparation of preliminarily emulsified O/W type emulsion

The aqueous phase portion prepared above was gradually added to the oil phase portion prepared above, followed by stirring with a chemistirrer at a rate of 620 rpm for 20 minutes. After completion of the stirring, the resulting mixture was allowed to stand for 10 minutes to conduct aeration, thereby obtaining an O/W type emulsion.

### (4-4) Preparation of W/O type emulsion

The preliminarily emulsified O/W type emulsion was passed through a hydrophobic porous PTFE membrane having a diameter of 90 mm, and an average pore size (dp) of 1.0 µm (a product of Advantech K.K.) at an average permeation rate of 1 kg/min. to perform phase inversion, thereby obtaining a W/O type emulsion. The emulsion obtained was sufficiently stable as in Example 1.

### Comparative Example 4a (Conventional membrane emulsification method)

The aqueous phase portion prepared in the same manner as in Example 4 (4-2) was introduced under pressure into the oil phase portion prepared in the same manner as in Example 4 (4-1) through a porous module having mounted therein a hydrophobic porous PTFE membrane having a diameter of 90 mm, and an average pore size (dp) of 1.0 µm (a product of Advantech K.K.) to obtain a W/O type emulsion. However, the production rate of the emulsion could only be increased up to 0.02 kg/min. on the average. Further, the emulsion obtained showed slight separation between the oil phase and the aqueous phase.

### Comparative Example 4b (Mechanical stirring method)

The aqueous phase portion prepared in the same manner as in Example 4 (4-2) was gradually added to the oil phase portion prepared in the same manner as in Example 4 (4-1) while stirring with a chemistirrer at a rate of 620 rpm. Immediately after completion of the addition of the aqueous phase, phase inversion occurred, and as a result, a W/O type emulsion could not be obtained.

### (5) Preparation Example of W/O Type Emulsion (W/O = 7/3)

### Example 5

### (5-1) Preparation of oil phase

30 Parts of corn oil were heated to 60°C. While stirring the oil with a chemistirrer (B-100 Model, a product of Tokyo Rikakikai Co., Ltd.) at a rate of 620 rpm, 2.0% of polyglycerin condensed ricinoleic acid ester ("SY GLYSTAR, CR-500," a trade name, a product of Sakamoto Yakuhin Kogyo K.K.) was added thereto to dissolve therein. After completion of the dissolution, a temperature of the oil phase was adjusted to 20°C.

### (5-2) Preparation of aqueous phase

70 Parts of water were heated to 60°C. While stirring water with a chemistirrer at a rate of 620 rpm, 2.0% of polyglycerin fatty acid ester having HLB of 11 ("SY GLYSTAR, MO-500," a trade name, a product of Sakamoto Yakuhin Kogyo K.K.) was added thereto to dissolve therein. After completion of the dissolution, a temperature of the aqueous phase was adjusted to 20°C.

### (5-3) Preparation of preliminarily emulsified O/W type emulsion

The oil phase portion was gradually added to the aqueous phase portion prepared above, followed by stirring with a chemistirrer at a rate of 620 rpm for 20 minutes. After completion of the stirring, the resulting mixture was allowed to stand for 10 minutes to conduct aeration, thereby obtaining an O/W type emulsion.

### (5-4) Preparation of W/O type emulsion

The preliminarily emulsified O/W type emulsion was passed through a hydrophobic porous PTFE membrane having a diameter of 90 mm, and an average pore size dp of 1.0 µm (a product of Advantech K.K.) at an average permeation rate of 1 kg/min. to perform phase inversion, thereby obtaining a W/O type emulsion. The emulsion obtained was sufficiently stable as in Example 1.

### Comparative Example 5a (Conventional membrane emulsification method)

The aqueous phase portion prepared in the same manner as in Example 5 (5-2) was introduced under pressure into the oil phase portion prepared in the same manner as in Example 5 (5-1) through a porous module having amounted therein a hydrophobic porous PTFE membrane having a diameter of 90 mm, and an average pore size dp of 1.0 µm (a product of Advantech K.K.). However, part of the oil phase and the aqueous phase showed separation, and a stable W/O type emulsion could not be obtained.

### Comparative Example 5b (Mechanical stirring method)

The aqueous phase portion prepared in the same manner as in Example 5 (5-2) was gradually added to the oil phase portion prepared in the same manner as in Example 5 (5-1) while stirring with a chemistirrer at a rate of 620 rpm. However, prior to completion of the addition of the aqueous phase, phase inversion occurred, and as a result, a W/O type emulsion could not be obtained.

### (6) Preparation Example of W/O Type Emulsion (W/O = 8/2)

### Example 6

### (6-1) Preparation of oil phase

20 Parts of corn oil were heated to 60°C. While stirring the oil with a chemistirrer (B-100 Model, a product of Tokyo Rikakikai Co., Ltd.) at a rate of 620 rpm, 2.0% of polyglycerin condensed ricinoleic acid ester ("SY GLYSTAR, CR-500," a trade name, a product of Sakamoto Yakuhin Kogyo K.K.) was added thereto to dissolve therein. After completion of the dissolution, a temperature of the oil phase was adjusted to 20°C.

### (6-2) Preparation of aqueous phase

80 Parts of water were heated to 60°C. While stirring water with a chemistirrer at a rate of 620 rpm, 2.0% of polyglycerin fatty acid ester having HLB of 11 ("SY GLYSTAR, MO-500," a trade name, a product of Sakamoto Yakuhin Kogyo K.K.) was added thereto to dissolve therein. After completion of the dissolution, a temperature of the aqueous phase was adjusted to 20°C.

### (6-3) Preparation of preliminarily emulsified O/W type emulsion

The oil phase portion was gradually added to the aqueous phase portion prepared above, followed by stirring with a chemistirrer at a rate of 620 rpm for 20 minutes. After completion of the stirring, the resulting mixture was allowed to stand for 10 minutes to conduct aeration, thereby obtaining an O/W type emulsion.

### (6-4) Preparation of W/O type emulsion

The preliminarily emulsified O/W type emulsion was passed through a hydrophobic porous PTFE membrane having a diameter of 90 mm, and an average pore size dp of 1.0 µm (a product of Advantech K.K.) at an average permeation rate of 1 kg/min. to perform phase inversion, thereby obtaining a W/O type emulsion. The emulsion obtained was considerably highly viscous, but was stable as in Example 1.

### Comparative Example 6a (Conventional membrane emulsification method)

The aqueous phase portion prepared in the same manner as in Example 6 (6-2) was introduced under pressure into the oil phase portion prepared in the same manner as in Example 6 (6-1) through a porous module having mounted therein a hydrophobic porous PTFE membrane having a diameter of 90 mm, and an average pore size dp of 1.0 µm (a product of Advantech K.K.). However, part of the oil phase and the aqueous phase showed separation, and a stable W/O type emulsion could not be obtained.

### Comparative Example 6b (Mechanical stirring method)

The aqueous phase portion prepared in the same manner as in Example 6 (6-2) was gradually added to the oil phase portion prepared in the same manner as in Example 6 (6-1) while stirring with a chemistirrer at a rate of 620 rpm. However, prior to completion of the addition of the aqueous phase, phase inversion occurred, and as a result, a W/O type emulsion could not be obtained.

### (7) Preparation Examples of O/W Type Emulsion (O/W = 7/3) Using hydrophilic PTFE Membrane

### Example 7

### (7-1) Preparation of preliminarily emulsified W/O type emulsion

The aqueous phase portion obtained in the same manner as in Example 2 (2-2) was gradually added to the oil phase portion obtained in the same manner as in Example 2 (2-1), followed by stirring with a chemistirrer at a rate of 620 rpm for 20 minutes. After completion of the stirring, the resulting mixture was allowed to stand for 10 minutes to conduct aeration, thereby obtaining a W/O type emulsion.

### (7-2) Preparation of O/W type emulsion

The preliminarily emulsified W/O type emulsion was passed through a hydrophilic porous PTFE membrane having a diameter of 90 mm and an average pore size dp of 1.0 µm (a product of Advantech K.K.) at an average permeation rate of 1 kg/min, thereby obtaining an O/W type emulsion. The emulsion obtained had a high stability as in Example 2.

### (8) Preparation Examples of O/W Type Emulsion (O/W = 7/3) Using hydrophilic Porous Nozzle

### Example 8

### (8-1) Preparation of preliminarily emulsified W/O type emulsion

The aqueous phase portion obtained in the same manner as in Example 2 (2-2) was gradually added to the oil phase portion obtained in the same manner as in Example 2 (2-1), followed by stirring with a chemistirrer at a rate of 620 rpm for 20 minutes. After completion of the stirring, the resulting mixture was allowed to stand for 10 minutes to conduct aeration, thereby obtaining a W/O type emulsion.

### (8-2) Preparation of O/W type emulsion

The preliminarily emulsified W/O type emulsion was introduced under pressure into an emulsification nozzle having mounted therein a gate composed of a device having fine hole-perforated gate ("KOASE MAZELAR NH-30S," a product of Chugoku Kayaku K.K.) having formed therein various fine hole-perforated gates having different fine hole diameter and two eccentric holes at an average permeation rate of 1 kg/min. to conduct phase inversion, thereby obtaining an O/W type emulsion. The emulsion obtained had a high stability as in Example 2.

The stability of the emulsified products obtained by the above Examples and Comparative Examples is shown in Table 1 below.

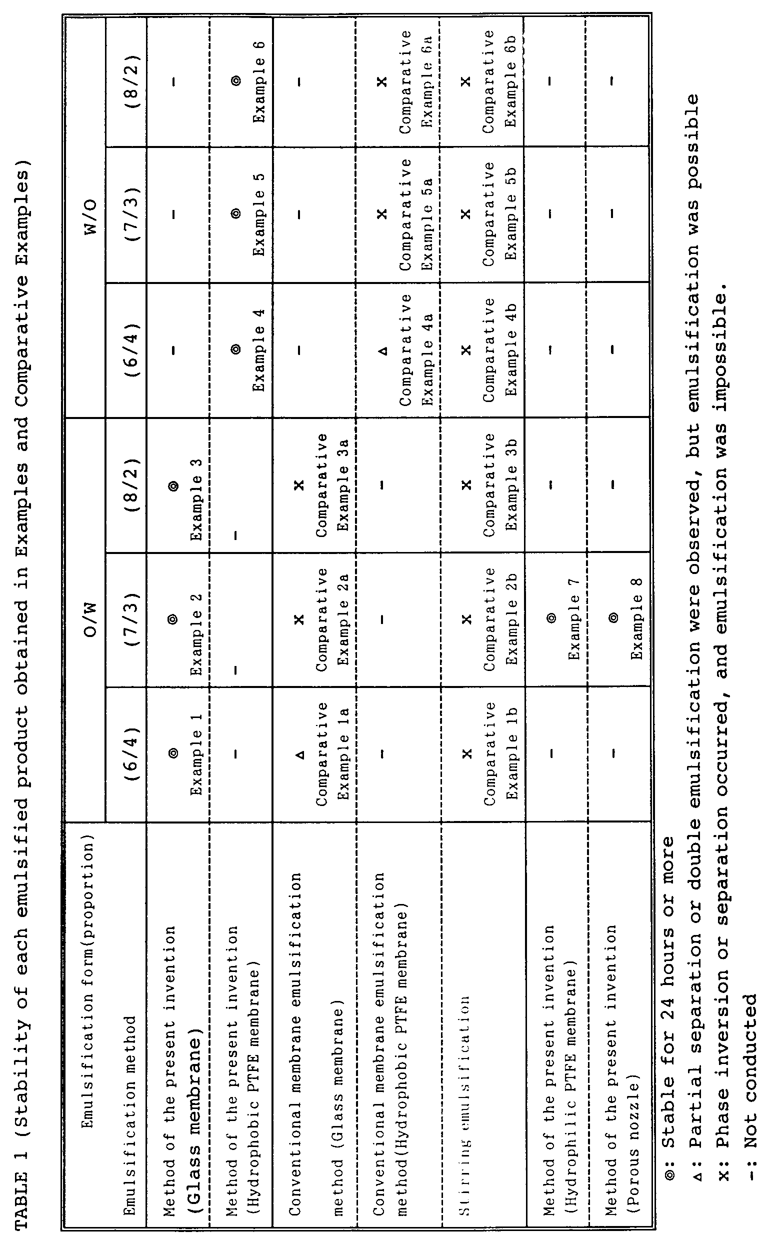

As described above, the method of preparing an emulsified fat and oil composition according to the present invention can produce an emulsified fat and oil composition having a disperse phase in a high compounding proportion with very ease and good efficiency, and also a stable emulsified product can be obtained. Thus, in view of the fact that an emulsified product having a disperse phase in a high compounding ratio can be obtained, which could not be obtained in the conventional method, the method of the present invention and the emulsified fat and oil composition having a disperse phase in a high compounding proportion obtained by this method are expected for novel applications in various fields including the field of food, such as margarine, whipped cream, and the like.

## Claims

1. A method of preparing an emulsified fat and oil composition, which comprises passing an emulsified fat and oil composition through a porous structure, thereby causing phase inversion of an emulsification form between an internal phase and an external phase.

2. A method of preparing an emulsified fat and oil composition, which comprises passing a previously prepared emulsified fat and oil composition through a porous structure, thereby causing phase inversion of an emulsification form between an internal phase and an external phase.

3. A method of preparing an emulsified fat and oil composition, which comprises passing a previously prepared water-in-oil type emulsified composition through a hydrophilic porous structure, thereby causing phase inversion between an aqueous phase and an oil phase to form an oil-in-water emulsified fat and oil composition.

4. A method of preparing an emulsified fat and oil composition, which comprises passing a previously prepared oil-in-water type emulsified composition through a hydrophobic porous structure, thereby causing phase inversion between an oil phase and an aqueous phase to form a water-in-oil emulsified fat and oil composition.

5. The method of preparing an emulsified fat and oil composition as claimed in any of claims 1 to 4, wherein the porous structure is a porous membrane.
